(19) Europäisches Patentamt
European Patent Office
Office européen des brevets

(11) EP 3 323 899 A1

(12) # DEMANDE DE BREVET EUROPEEN

(43) Date de publication:
**23.05.2018 Bulletin 2018/21**

(51) Int Cl.:
***C22B 3/32*** *(2006.01)* ***C22B 59/00*** *(2006.01)*

(21) Numéro de dépôt: **17202322.8**

(22) Date de dépôt: **17.11.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **21.11.2016 FR 1661294**

(71) Demandeurs:
- **Commissariat à l'énergie atomique et aux énergies alternatives 75015 Paris (FR)**
- **UNIVERSITE DE MONTPELLIER 34090 Montpellier (FR)**

(72) Inventeurs:
- **PELLET-ROSTAING, Stéphane 69100 VILLEURBANNE (FR)**
- **DUHAMET, Jean 30200 BAGNOLS SUR CEZE (FR)**
- **TOURE, Moussa MAGNAMBOUGOU BAMAKO (ML)**
- **ARRACHART, Guilhem 30126 SAINT LAURENT DES ARBRES (FR)**
- **TURGIS, Raphaël 74150 MARIGNY SAINT MARCEL (FR)**

(74) Mandataire: **Brevalex**
**95, rue d'Amsterdam**
**75378 Paris Cedex 8 (FR)**

(54) **EXTRACTION SÉLECTIVE DES TERRES RARES DE SOLUTIONS AQUEUSES ACIDES PAR UN MONOAMIDE**

(57) L'invention se rapporte à l'utilisation du *N,N*-butylacétamide comme extractant pour extraire au moins une terre rare d'une phase aqueuse acide.

Elle se rapporte aussi à un procédé d'extraction liquide-liquide d'au moins une terre rare d'une phase aqueuse acide, qui comprend au moins une mise en contact de la phase aqueuse acide avec une phase organique non miscible à l'eau et comprenant au moins un extractant, puis une séparation de la phase aqueuse acide de la phase organique, et qui est caractérisé en ce que l'extractant est le *N,N*-dibutylacétamide.

Elle se rapporte également à un procédé de récupération d'au moins une terre rare à partir d'une phase aqueuse acide, qui met en oeuvre ce procédé d'extraction.

Applications : production de terres rares à partir de concentrés de minerais naturels ou urbains et, en particulier, recyclage des terres rares contenues dans les aimants permanents Néodyme-Fer-Bore, usagés ou rebutés.

EP 3 323 899 A1

## Description

### DOMAINE TECHNIQUE

L'invention se rapporte au domaine de l'extraction et de la récupération des terres rares présentes dans des solutions aqueuses acides.

Plus spécifiquement, l'invention se rapporte à l'utilisation d'un monoamide particulier, à savoir le *N,N*-butylacétamide, comme extractant pour extraire au moins une terre rare d'une phase aqueuse acide.

Elle se rapporte aussi à un procédé qui permet d'extraire par la technique d'extraction liquide-liquide au moins une terre rare d'une phase aqueuse acide et dans lequel le *N,N*-butylacétamide est utilisé comme extractant.

Elle se rapporte également à un procédé qui permet de récupérer au moins une terre rare à partir d'une phase aqueuse acide et qui met en oeuvre ce procédé d'extraction.

L'invention trouve une application dans la production de terres rares que ce soit à partir de concentrés de minerais naturels riches en terres rares tels que les monazites, les bastnaésites ou les xénotimes, de concentrés issus du traitement de minerais naturels autres que les minerais riches en terres rares tels que les concentrés de scories d'étain, de concentrés de « minerais urbains », c'est-à-dire de « mines » constituées de déchets post-consommation industriels et domestiques comprenant des terres rares et, notamment, de déchets d'équipements électriques et électroniques (encore appelés « DEEE » ou « D3E »), ou de concentrés de rebuts de fabrication de produits comprenant des terres rares.

Plus particulièrement, l'invention trouve une application dans le recyclage des terres rares contenues dans les aimants permanents à terres rares, usagés ou rebutés, et, notamment, dans les aimants permanents Néodyme-Fer-Bore (ou NdFeB).

### ÉTAT DE LA TECHNIQUE ANTÉRIEURE

Les propriétés physiques et chimiques particulières des terres rares (scandium, yttrium et lanthanides) font que ces terres rares représentent actuellement des éléments chimiques indispensables dans de nombreux domaines industriels : industries du verre et des céramiques, catalyse, métallurgie, fabrication d'aimants permanents, de dispositifs optiques, de luminophores, etc.

Cette spécificité, conjuguée à une croissance de la demande mondiale en terres rares ainsi qu'à un nombre limité de pays producteurs de terres rares, engendrent des risques d'approvisionnement des marchés en ces métaux.

Compte-tenu de ces risques, le recyclage des terres rares présentes dans des matériaux usagés ou rebutés est l'objet de toutes les attentions.

Un des premiers marchés en volume et en valeur marchande de recyclage des terres rares concerne les aimants permanents NdFeB que l'on trouve dans un certain nombre de déchets D3E (disques durs d'ordinateurs, haut-parleurs de matériels audio ou vidéo, dispositifs magnétiques, etc). Cette ressource pour le recyclage des terres rares présente l'avantage de comprendre des proportions en terres rares intéressantes et valorisables. En effet, les teneurs massiques en terres rares de ces aimants sont de l'ordre 30% pour environ 70% de fer. La composition des aimants permanents NdFeB varie selon les applications de ces aimants et leur fabricants mais ils contiennent typiquement des terres rares lourdes (dysprosium et, à un degré moindre, gadolinium, terbium) très valorisables ainsi que des terres rares légères (praséodyme et néodyme notamment). Outre de contenir du fer en quantité importante, les aimants permanents NdFeB sont généralement recouverts d'une enveloppe protectrice anticorrosion à base de nickel et de cuivre ou d'autres métaux de transition (cobalt, chrome, etc.).

Il serait donc souhaitable de parvenir à récupérer les terres rares présentes dans les aimants permanents NdFeB et, notamment, le dysprosium, le praséodyme et le néodyme avec des puretés finales suffisantes pour permettre le recyclage de ces terres rares (que ce soit sous la forme d'aimants ou dans d'autres applications) et idéalement supérieures à 99,5%.

La voie hydrométallurgique, basée sur la technique d'extraction liquide-liquide, est communément considérée comme une des voies les plus appropriées commercialement pour récupérer les terres rares à partir du milieu dans lequel elles se trouvent et surtout les séparer les unes des autres.

Les procédés hydrométallurgiques, qui sont actuellement utilisés industriellement pour récupérer les terres rares à partir d'une phase aqueuse acide, emploient préférentiellement des extractants organophosphorés comme des acides phosphoriques, des acides phosphoniques et des acides phosphiniques, des acides carboxyliques et des phosphates d'alkyles. Il s'agit, par exemple, de l'acide di-2-éthylhexylphosphorique (ou HDEHP), de l'acide 2-éthylhexyl-2-éthylhexylphosphonique (ou HEH[EHP]), de l'acide bis(triméthyl-2,4,4-pentyl)phosphinique (ou Cyanex 272), des mélanges d'acides carboxyliques ramifiés commercialisés sous les noms Versatic™ 10 et Versatic™ 911, et du tri-*n*-butylphosphate (ou TBP).

Toutefois, l'utilisation de ces extractants n'est pas adaptée à la récupération des terres rares contenues dans

des phases aqueuses acides issues du traitement d'aimants permanents NdFeB car ils ont tous l'inconvénient d'extraire fortement le fer ainsi que les autres métaux de transition. Leur utilisation dans cette récupération nécessiterait donc d'éliminer les métaux de transition de la phase aqueuse, par exemple par précipitation, avant d'en extraire les terres rares, ce qui conduirait à un procédé lourd à mettre en oeuvre et donc peu intéressant industriellement.

De plus, les extractants organophosphorés et les phosphates d'alkyles ont l'inconvénient de générer des déchets secondaires contenant du phosphore dont le traitement est plus complexe que celui des déchets secondaires générés par les extractants uniquement composés de carbone, d'hydrogène, d'oxygène et d'azote (CHON).

C'est ce qui a amené une équipe de chercheurs du Commissariat à l'Énergie Atomique et aux Énergies Alternatives (ou CEA) à proposer, dans la demande internationale PCT WO 2016/046179, ci-après référence **[1],** l'utilisation de diglycol-amides lipophiles, c'est-à-dire à 24 atomes de carbone ou plus, tels que le *N,N,N',N'*-tétraoctyl-3-oxapentanediamide (ou TODGA), pour récupérer les terres rares contenues dans une phase aqueuse acide issue du traitement d'aimants permanents NdFeB et, notamment, le dysprosium, le praséodyme et le néodyme. Cette référence montre que les diglycolamides lipophiles permettent effectivement de récupérer ces trois terres rares, non seulement quantitativement mais également sélectivement vis-à-vis des autres éléments susceptibles d'être également présents en phase aqueuse, en particulier vis-à-vis du fer et du bore, ce qui en fait des candidats de choix pour une mise en oeuvre à une échelle industrielle.

Néanmoins, devant l'enjeu majeur que représente le recyclage des terres rares présentes dans les déchets D3E et, en particulier, dans les aimants permanents NdFeB, il serait souhaitable de pouvoir élargir le panel d'extractants aptes à être utilisés pour les besoins de ce recyclage.

Or, dans le cadre de leurs travaux, les Inventeurs ont constaté que le *N,N*-dibutylacétamide, qui présente :

- une très faible solubilité dans l'eau (0,6% massique, 5,3 g/L à 25°C), comparable à celle du TBP,
- un point d'éclair relativement élevé (87,7°C), ce qui élimine tout risque d'incendie lié à son emploi,
- une viscosité modérée (4,96 mPa.s à 25°C) et variant peu en présence d'une charge en cations métalliques,

et qui, de plus, est stable en présence d'acides forts et, notamment, d'acide nitrique, et est uniquement composé de carbone, d'hydrogène, d'oxygène et d'azote (CHON), permet d'extraire les terres rares d'une phase aqueuse acide, et ce, à la fois très efficacement et avec une haute sélectivité vis-à-vis des autres éléments susceptibles d'être également présents dans cette phase aqueuse acide et, notamment, vis-à-vis du fer.

Et c'est donc sur cette constatation qu'est basée l'invention.

## EXPOSÉ DE L'INVENTION

L'invention a donc, en premier lieu, pour objet l'utilisation du *N,N*-dibutylacétamide comme extractant pour extraire au moins une terre rare d'une phase A1 aqueuse et acide.

La technique d'extraction liquide-liquide étant privilégiée dans le cadre de l'invention, cette dernière a aussi pour objet un procédé d'extraction liquide-liquide d'au moins une terre rare d'une phase A1 aqueuse et acide, qui comprend au moins une mise en contact de la phase A1 avec une phase organique non miscible à l'eau et comprenant au moins un extractant, puis une séparation de la phase A1 de la phase organique, et qui est caractérisé en ce que l'extractant est le *N,N*-dibutylacétamide.

On rappelle que le *N,N*-dibutylacétamide est un monoamide qui répond à la formule ci-après :

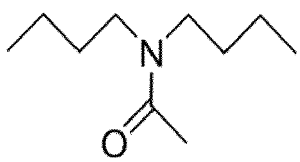

Dans le cadre de l'invention, on préfère que la phase organique soit constituée de *N,N*-dibutylacétamide, c'est-à-dire qu'elle ne comprenne rien d'autre que ce composé et, notamment, qu'elle ne comprenne pas de diluant organique, auquel cas la phase organique comprend 4,79 mol/L de *N,N*-dibutylacétamide.

En effet, outre que l'extraction des terres rares par le *N,N*-dibutylacétamide s'est révélée d'autant plus performante que la concentration de cet extractant dans la phase organique est élevée (cf. exemple 1 ci-après), il est plus simple de gérer, à une échelle industrielle, des effluents organiques à un seul constituant que des effluents organiques à plusieurs constituants. De plus, l'absence d'un diluant organique, dont l'utilisation n'est le plus souvent motivée que par la nécessité de créer une différence de densité propre à faciliter la séparation des phases aqueuse et organique, permet de diminuer considérablement le volume de phase organique nécessaire à la mise en oeuvre du procédé.

Toutefois, il va de soi qu'il est tout à fait possible de prévoir que la phase organique comprenne un diluant

organique (par exemple, un diluant organique de type aliphatique tel que le *n*-dodécane, le tétrapropylène hydrogéné (TPH) ou un kérosène comme l'Isane™ IP-185), ou un co-extractant, c'est-à-dire un deuxième composé ayant, lui aussi, une aptitude à extraire les terres rares d'une phase aqueuse acide, ou bien encore les deux.

Auquel cas, la phase organique comprend au moins 0,1 mol/L de *N,N*-dibutylacétamide, de préférence au moins 3 mol/L de *N,N*-dibutylacétamide et, mieux encore, au moins 4 mol/L de *N,N*-dibutylacétamide.

Conformément à l'invention, la phase A1 comprend, de préférence, un acide minéral fort (c'est-à-dire un acide minéral qui, en solution aqueuse, se dissocie totalement en ions $H^+$ selon la réaction $HA_{(aq.)} \rightarrow H^+_{(aq.)} + A^-_{(aq.)}$), lequel acide est avantageusement l'acide nitrique, auquel cas cette phase aqueuse comprend également un sel qui est, de préférence, un sel nitrate et, plus encore, un sel nitrate d'un métal alcalin ou alcalino-terreux, le nitrate de sodium et le nitrate de potassium étant privilégiés.

Conformément à l'invention, on préfère que la concentration de l'acide nitrique dans la phase A1 ne dépasse pas 5 mol/L, l'extraction des terres rares par le *N,N*-dibutylacétamide s'étant, en effet, révélée plus performante à faible acidité (cf. exemple 1 ci-après) et, plus encore, soit comprise entre 0,01 et 0,5 mol/L.

De la même manière, la concentration du sel nitrate dans la phase A1 ayant une influence sur l'extraction des terres rares, on préfère que cette concentration soit au moins égale à 0,5 mol/L et, plus encore, soit comprise entre 1 mol/L et 5 mol/L.

De manière préférée entre toutes, la concentration de l'acide nitrique dans la phase A1 est de 0,1 mol/L tandis que la concentration du sel nitrate dans la phase A1 est comprise entre 2,5 mol/L et 3 mol/L.

Le procédé d'extraction de l'invention est, de préférence, mis en oeuvre à la température ambiante, c'est-à-dire à une température allant de 20°C à 25°C.

Ce procédé d'extraction peut notamment être mis à profit pour récupérer une ou plusieurs terres rares à partir d'une phase aqueuse acide dans laquelle elle(s) se trouve(nt).

Aussi, l'invention a-t-elle également pour objet un procédé de récupération d'au moins une terre rare à partir d'une phase A1 aqueuse et acide, qui est caractérisé en ce qu'il comprend :

a) une extraction de ladite au moins une terre rare de la phase A1 par un procédé d'extraction tel que précédemment défini ; et
b) une désextraction de ladite au moins une terre rare de la phase organique obtenue à l'issue de a), la désextraction comprenant au moins une mise en contact de la phase organique avec une phase A2 aqueuse, puis une séparation de la phase organique de la phase A2.

Conformément à l'invention, la phase A2 peut être constituée d'eau distillée, c'est-à-dire qu'elle ne comprend que de l'eau distillée.

En variante, la phase A2 peut également être une phase aqueuse acide, auquel cas elle comprend, de préférence, le même acide que la phase A1.

Ainsi, si la phase A1 comprend de l'acide nitrique, alors la phase A2 peut être soit une solution aqueuse comprenant au moins 5 mol/L d'acide nitrique soit une solution aqueuse comprenant la même concentration en acide nitrique que la phase A1 mais une concentration moindre en sel nitrate comme, par exemple, une solution aqueuse comprenant 0,1 mol/L d'acide nitrique et 0,5 mol/L de sel nitrate.

De préférence, la phase A2 est constituée d'eau distillée ou d'une solution aqueuse comprenant au moins 5 mol/L d'acide nitrique, typiquement de 5 mol/L à 10 mol/L d'acide nitrique.

Conformément à l'invention, la phase A1 dont la (les) terre(s) rare(s) est (sont) extraite(s) ou à partir de laquelle elle(s) est (sont) récupérée(s) peut être une solution d'attaque acide d'un concentré d'un minerai naturel ou urbain comprenant des terres rares.

De préférence, la phase A1 est une solution issue du traitement d'aimants permanents NdFeB, usagés ou rebutés, par un acide fort, auquel cas les terres rares sont le dysprosium, le praséodyme et le néodyme.

Une telle phase est, par exemple, une solution obtenue par dissolution d'une poudre d'aimants permanents NdFeB dans un acide fort tel que l'acide nitrique, supplémenté en un agent oxydant tel que le peroxyde d'hydrogène, comme décrit dans la demande internationale PCT WO 2014/064587, ci-après référence **[2]**, la poudre d'aimants permanents pouvant, elle-même, être obtenue par démagnétisation et broyage d'aimants permanents puis traitement d'hydruration-déshydruration du broyat, comme également décrit dans la référence **[2].**

D'autres avantages et caractéristiques de l'invention apparaîtront à la lecture du complément de description qui suit, qui se réfère aux figures jointes en annexe et qui se rapporte à des essais expérimentaux ayant permis de valider l'utilisation du DBAc comme extractant des terres rares ainsi qu'à un schéma d'un exemple de mise en oeuvre du procédé de récupération selon l'invention.

Il va de soi que ces exemples ne sont donnés qu'à titre d'illustration de l'objet de l'invention et ne constituent en aucun cas une limitation de cet objet.

## BRÈVE DESCRIPTION DES FIGURES

La figure 1 illustre l'influence de la présence d'un sel nitrate dans une phase aqueuse nitrique sur la capacité du DBAc à extraire le néodyme de cette phase aqueuse nitrique.

Les figures 2 et 3 illustrent l'influence de la concentration du DBAc en phase organique sur la capacité de cet extractant à extraire le néodyme d'une phase aqueuse nitrique.

Les figures 4 et 5 illustrent la variation de la concentration du néodyme en phase organique dans l'extractant DBAc en fonction de la concentration du néodyme en phase aqueuse à l'équilibre.

La figure 6 illustre l'influence du degré d'acidité d'une phase aqueuse nitrique sur la capacité du DBAc à extraire le néodyme de cette phase aqueuse nitrique.

La figure 7 illustre l'influence de la température d'extraction sur la capacité du DBAc à extraire le néodyme d'une phase aqueuse nitrique.

La figure 8 illustre l'absence d'influence de la concentration du fer dans une phase aqueuse nitrique sur la capacité du DBAc à extraire le néodyme, le praséodyme et le dysprosium de cette phase sélectivement vis-à-vis du fer et sélectivement pour chacune de ces terres rares vis-à-vis des deux autres.

La figure 9 représente schématiquement un exemple de mise en oeuvre du procédé de récupération selon l'invention conçu pour la production, à une échelle industrielle, de néodyme, de praséodyme et de dysprosium sous forme de trioxydes, à partir d'une phase aqueuse nitrique issue de la dissolution d'aimants permanents NdFeB, usagés ou rebutés, dans l'acide nitrique ; sur cette figure, les rectangles référencés 1 et 2 représentent des extracteurs multi-étagés tels que classiquement utilisés dans des installations industrielles pour réaliser des extractions liquide-liquide comme, par exemple, des extracteurs constitués de batteries de mélangeurs-décanteurs ; par ailleurs, les flux de phase organique entrant et sortant de ces extracteurs sont symbolisés par un trait continu tandis que les flux de phase aqueuse entrant et sortant desdits extracteurs sont symbolisés par un trait en pointillés.

## EXPOSÉ DÉTAILLÉ DE L'INVENTION

Dans les exemples qui suivent, toutes les mesures de concentration ont été réalisées par spectrométrie d'émission atomique par torche à plasma, encore connue sous le sigle ICP-OES.

Par ailleurs, les coefficients de distribution et les facteurs de séparation ont été déterminés conformément aux conventions du domaine des extractions liquide-liquide, à savoir que :

- le coefficient de distribution (ou de partage) d'un élément métallique M, noté $D_M$, entre deux phases, respectivement organique et aqueuse, est égal à :

$$D_M = \frac{[M]_{org.}}{[M]_{aq.}}$$

avec :

$[M]_{org.}$ = concentration de l'élément métallique dans la phase organique à l'équilibre d'extraction (en mg/L) ; et
$[M]_{aq.}$ = concentration de l'élément métallique dans la phase aqueuse à l'équilibre d'extraction (en mg/L) ;

- le facteur entre deux éléments métalliques M1 et M2, noté $FS_{M1/M2}$, est égal à :

$$FS_{M1/M2} = \frac{D_{M1}}{D_{M2}}$$

avec :

$D_{M1}$ = coefficient de distribution de l'élément métallique M1; et
$D_{M2}$ = coefficient de distribution de l'élément métallique M2.

**EXEMPLE 1 : Extraction du néodyme d'une phase aqueuse nitrique**

**1.1- Influence de l'ajout d'un sel nitrate à la phase aqueuse nitrique**

Des essais visant à extraire le néodyme d'une phase aqueuse nitrique ont tout d'abord été réalisés en tubes en utilisant :

- comme phases organiques : des phases uniquement constituées de DBAc (soit 4,79 mol/L de DBAc) ; et
- comme phases aqueuses : des solutions aqueuses comprenant 1 ± 0,15 g/L de néodyme (apporté sous forme de nitrate de néodyme hydraté $Nd(NO_3)_3•6H_2O$), 0,1 mol/L d'acide nitrique ($HNO_3$) et de 0,5 mol/L à 3 mol/L de nitrate de sodium ($NaNO_3$).

Les phases organiques et aqueuses ont été mises en contact les unes avec les autres dans un rapport O/A de 1, pendant 30 minutes, à température ambiante et sous agitation rotative, puis séparées les unes des autres par décantation. Les concentrations du néodyme ont été mesurées dans les phases aqueuses ainsi récupérées.
Les résultats de ces essais sont illustrés sur la figure 1 qui représente la variation du coefficient de distribution du néodyme, noté $D_{Nd}$, en fonction de la concentration initiale du nitrate de sodium, notée $[NaNO_3]$ et exprimée en mol/L, dans les phases aqueuses.
Comme le montre cette figure, aucune extraction mesurable du néodyme n'est constatée en l'absence d'ions nitrates apportés par l'ajout en phase aqueuse du nitrate de sodium.
Par contre, l'augmentation de la concentration du nitrate de sodium en phase aqueuse, de 1 mol/L à 3 mol/L, se traduit par une augmentation du coefficient de distribution du néodyme d'un facteur 8, $D_{Nd}$ passant, en effet, d'un peu moins de 3 à 24,5.
L'extraction du néodyme est favorisée par la présence d'un sel nitrate en phase aqueuse qui déplace l'équilibre de complexation vers la formation de complexes nitrate de néodyme/DBAc. Ceci est cohérent avec la littérature qui ne fait état, à la connaissance des Inventeurs, d'aucune étude montrant la possibilité d'extraire les terres rares et, notamment, le néodyme d'une phase aqueuse nitrique au moyen de monoamides sans l'ajout d'un sel nitrate dans cette phase aqueuse.

**1.2 - Influence de la concentration du DBAc dans la phase organique**

L'influence de la concentration du DBAc en phase organique sur la capacité de cet extractant à extraire le néodyme d'une phase aqueuse nitrique a été appréciée par des essais qui ont été réalisés en tubes en utilisant :

- comme phases organiques : des phases comprenant soit 2, 3 ou 4 mol/L de DBAc dans le *n*-dodécane soit 4,79 mol/L de DBAc (ce qui correspond à une phase organique uniquement constituée de DBAc) ; et
- comme phases aqueuses : des solutions aqueuses comprenant 1 ± 0,15 g/L de néodyme (apporté sous forme de $Nd(NO_3)_3•6H_2O$), 0,1 mol/L d'$HNO_3$ et 2,5 mol/L de $NaNO_3$.

Les phases organiques et aqueuses ont été mises en contact les unes avec les autres dans un rapport O/A de 1, pendant 30 minutes, à température ambiante et sous agitation rotative, puis séparées les unes des autres par décantation. Les concentrations du néodyme ont été mesurées dans les phases aqueuses et les coefficients de distribution du néodyme ainsi récupérées.
Les résultats de ces essais sont illustrés sur les figures 2 et 3 qui représentent la variation du coefficient de distribution du néodyme, noté $D_{Nd}$, en fonction de la concentration du DBAc, notée [DBAc] et exprimée en mol/L, dans les phases organiques, la figure 2 selon une échelle arithmétique et la figure 3 selon une échelle logarithmique.
Comme le montrent ces figures, l'extraction du néodyme est d'autant plus élevée que la concentration du DBAc en phase organique est élevée.
La figure 3 montre une droite de régression linéaire de pente 3 ($y = 2{,}9 \pm (0{,}1)x - 0{,}76 \pm 0{,}06$) avec un coefficient $R^2$ de 0,99874, ce qui suggère l'implication de complexes 3:1, c'est-à-dire de complexes $Nd(NO_3)DBAc_3$.

**1.3 - Influence de la concentration initiale du néodyme dans la phase aqueuse nitrique**

La capacité de charge du DBAc a été appréciée par des essais d'extraction qui ont été réalisés en tubes en utilisant :

- comme phases organiques : des phases uniquement constituées de DBAc ; et
- comme phases aqueuses : des solutions aqueuses comprenant de 0,9 g/L à 167,6 g/L de néodyme (apporté sous

forme de $Nd(NO_3)_3 \bullet H_2O$), 0,1 mol/L d'$HNO_3$ et 2,5 mol/L de $NaNO_3$.

Les phases organiques et aqueuses ont été mises en contact les unes avec les autres dans un rapport O/A de 1, pendant 30 minutes, à température ambiante et sous agitation rotative, puis séparées les unes des autres par décantation. Les concentrations du néodyme ont été mesurées dans les phases aqueuses ainsi récupérées, tandis que celles en phases organiques ont été déterminées par bilan de matière.

Les résultats de ces essais sont illustrés sur les figures 4 et 5 qui représentent la variation de la concentration du néodyme dans les phases organiques à l'équilibre, notée $[Nd]_{org.}^{éq.}$ et exprimée en g/L, en fonction de la concentration du néodyme dans les phases aqueuses à l'équilibre, notée $[Nd]_{aq.}^{éq.}$ et exprimée en g/L, la figure 4 selon une échelle arithmétique et la figure 5 selon une échelle logarithmique.

La figure 4 montre qu'un début de saturation du DBAc en néodyme est observé à 126 g/L de Nd dans le DBAc pour une valeur de $D_{Nd}$ de 3 mais sans formation d'une troisième phase. Toutefois, dans la mesure où, comme précédemment indiqué, la présence d'un sel nitrate en phase aqueuse favorise l'extraction du néodyme par le DBAc par déplacement de l'équilibre de complexation vers la formation de complexes nitrate de néodyme/DBAc, une capacité de charge du DBAc supérieure à 126 g/L peut être espérée pour des concentrations de sel nitrate en phase aqueuse supérieures à 2,5 mol/L.

En tout état de cause, ces résultats montrent la possibilité de charger en terres rares le DBAc au-delà des 100 g/L qui représentent la limite de charge (LCC) des extractants classiquement utilisés dans le domaine de l'extraction des terres rares tels que l'acide di-(2-éthylhexyl)phosphorique (ou HDEHP), le tri-*n*-butylphosphate (ou TBP) et les acides versatiques commercialisés sous les noms Versatic™ 10 et Versatic™ 911.

Par ailleurs, la figure 5 montre une droite de régression linéaire de pente 1 ($y = 0,88 \pm (0,02)x + 1,08 \pm 0,02$) avec un coefficient $R^2$ de 0,99889, ce qui confirme la présence d'un monomère Nd dans l'espèce neutre $Nd(NO_3)_3$ extraite par le DBAc à partir d'une phase aqueuse nitrique comprenant initialement de 0,90 g/L à 35,34 g/L de néodyme.

**1.4 - Influence du degré d'acidité de la phase aqueuse nitrique**

L'influence du degré d'acidité d'une phase aqueuse nitrique sur la capacité du DBAc à extraire le néodyme de cette phase a été appréciée par des essais qui ont été réalisés en tubes en utilisant :

- comme phases organiques : des phases uniquement constituées de DBAc ; et
- comme phases aqueuses : des solutions aqueuses comprenant 1 $\pm$ 0,15 g/L de néodyme (apporté sous forme de $Nd(NO_3)_3 \bullet 6H_2O$), 2,5 mol/L de $NaNO_3$ et de 0,1 mol/L à 4 mol/L d'$HNO_3$.

Les phases organiques et aqueuses ont été mises en contact les unes avec les autres dans un rapport O/A de 1, pendant 30 minutes, à température ambiante et sous agitation rotative, puis séparées les unes des autres par décantation. Les concentrations du néodyme ont été mesurées dans les phases aqueuses ainsi récupérées.

Les résultats de ces essais sont illustrés sur la figure 6 qui représente la variation du coefficient de distribution du néodyme, noté $D_{Nd}$, en fonction de la concentration initiale de l'acide nitrique, notée $[HNO_3]$ et exprimée en mol/L, dans les phases aqueuses.

Cette figure montre que l'augmentation de la concentration de l'acide nitrique en phase aqueuse, de 0,01 mol/L à 4 mol/L, se traduit par une diminution progressive de l'extraction du néodyme par le DBAc. Au-delà de 1 mol/L d'acide nitrique, les valeurs de $D_{Nd}$ tendent vers zéro. Ceci pourrait s'expliquer par une compétition entre l'extraction de $HNO_3$ par le DBAc et celle du néodyme par ce même extractant.

Elle met ainsi en évidence la nécessité d'opérer à faible acidité si l'on veut extraire efficacement le néodyme d'un milieu nitrique en présence d'un sel nitrate, par exemple à 0,1 mol/L d'$HNO_3$ pour une valeur de $D_{Nd}$ de 16,0 $\pm$ 0,1, par le DBAc.

**1.5 - Influence de la température d'extraction**

L'influence de la température d'extraction sur la capacité du DBAc à extraire le néodyme d'une phase aqueuse nitrique a été appréciée par des essais d'extraction qui ont été réalisés en tubes en utilisant :

- comme phases organiques : des phases uniquement constituées de DBAc ; et
- comme phases aqueuses : des solutions aqueuses comprenant 1 $\pm$ 0,15 g/L de néodyme (apporté sous forme de $Nd(NO_3)_3 \bullet 6H_2O$), 0,1 mol/L d'$HNO_3$ et 2,5 mol/L de $NaNO_3$.

Les phases organiques et aqueuses ont été mises en contact les unes avec les autres dans un rapport O/A de 1, pendant 30 minutes, à une température allant de 25°C à 65°C et sous agitation rotative, puis séparées les unes des autres par décantation. Les concentrations du néodyme ont été mesurées dans les phases aqueuses ainsi récupérées.

Les résultats de ces essais sont illustrés sur la figure 7 qui représente la variation du coefficient de distribution du néodyme, noté $D_{Nd}$, en fonction de la température, notée T et exprimée en °C.

Cette figure montre qu'il est possible d'envisager une extraction du néodyme par le DBAc à une température de 65°C puisque le coefficient de distribution du néodyme obtenu à cette température est supérieur à 4. Toutefois, l'extraction du néodyme par le DBAc à une température inférieure à 65°C permettrait de procéder plus efficacement ($D_{Nd}$ > 5) tout en ayant une marge significative par rapport au point éclair du DBAc (87°C).

**EXEMPLE 2 : Désextraction du néodyme d'une phase organique constituée de DBAc**

La possibilité de désextraire le néodyme d'une phase organique uniquement constituée de DBAc, dans laquelle il a été préalablement extrait, a été vérifiée par des essais d'extraction/désextraction qui ont été réalisés en tubes et consistant :

- à extraire le néodyme d'une phase aqueuse comprenant 1 ± 0,15 g/L de néodyme (apporté sous forme de $Nd(NO_3)_3 \bullet 6H_2O$), 0,1 mol/L d'$HNO_3$ et 2,5 mol/L de $NaNO_3$ au moyen d'une phase organique uniquement constituée de DBAc ; puis
- à désextraire le néodyme de la phase organique ainsi chargée en néodyme au moyen d'une phase aqueuse constituée soit d'eau MilliQ™ soit d'une solution aqueuse à 10 mol/L d'$HNO_3$.

L'extraction a été réalisée dans les mêmes conditions opératoires que celles décrites au point 1.1 ci-avant (rapport O/A = 1, durée de contact = 30 minutes, température ambiante, agitation rotative). La valeur de $D_{Nd}$ à cette étape est de 16,0 ± 0,1.

Les désextractions ont été réalisées en mettant en contact une aliquote de phase organique en contact avec l'une des phases aqueuses de désextraction dans un rapport A/O de 1, pendant 1 minute, à température ambiante (20-23°C) et sous agitation au vortex. Après séparation des phases par décantation, les concentrations du néodyme ont été mesurées dans les phases aqueuses ainsi récupérées.

Les valeurs du coefficient de distribution du néodyme obtenues pour ces désextractions sont présentées dans le tableau I ci-après.

Tableau I

| Solutions aqueuses de désextraction | $D_{Nd}$ |
|---|---|
| Eau MilliQ™ | 0,068 |
| $HNO_3$ (10 mol/L) | < 0,01 |

Ce tableau montre que des valeurs de $D_{Nd}$ inférieures à 0,1 sont obtenues pour l'eau MilliQ™ et pour la solution aqueuse à 10 mol/Ld'$HNO_3$, ce qui signifie que la totalité ou la quasi-totalité du néodyme présent dans le DBAc se retrouve en phase aqueuse après un seul contact d'une minute.

De plus, comme montré sur la figure 6, les valeurs de $D_{Nd}$ tendent vers 0 lorsque le néodyme est extrait par le DBAc d'une phase aqueuse nitrique comprenant 1 g/L de néodyme, 2,5 mol/L de $NaNO_3$ et une concentration supérieure à 1 mol/L d'$HNO_3$.

L'eau MilliQ™ et des solutions aqueuses à 3 mol/L d'$HNO_3$ ou plus sont donc appropriées pour désextraire le néodyme d'une phase organique uniquement constituée de DBAc.

**EXEMPLE 3 : Extraction des terres rares présentes dans une phase aqueuse nitrique synthétique mimant une solution issue de la dissolution d'aimants permanents NdFeB dans l'acide nitrique**

**3.1 - Influence de l'ajout d'un sel nitrate à la phase aqueuse nitrique**

La capacité du DBAc à extraire sélectivement les terres rares (néodyme, dysprosium et praséodyme) de solutions issues de la dissolution d'aimants permanents NdFeB dans l'acide nitrique, ainsi que l'influence de l'ajout d'un sel nitrate à ce type de solution sur les performances du DBAc ont été vérifiées par des essais d'extraction qui ont été réalisés en tubes en utilisant :

- comme phases organiques : des phases uniquement constituées de DBAc ; et
- comme phases aqueuses : des solutions aqueuses synthétiques comprenant du néodyme (apporté sous forme de $Nd(NO_3)_3•6H_2O$), du dysprosium (apporté sous forme de $Dy(NO_3)_3•6H_2O$), du praséodyme (apporté sous forme de $Pr(NO_3)_3$), du fer (apporté sous forme de $Fe(NO_3)_3•H_2O$), du cobalt (apporté sous forme de $Co(NO_3)_3$), du nickel (apporté sous forme de $Ni(NO_3)_3$) et du bore (apporté sous forme de $H_3BO_3$) - pour s'approcher au mieux de la composition en cations métalliques des solutions aqueuses acides issues de la dissolution de ce type d'aimants - ainsi que de l'acide nitrique et du nitrate de sodium, ce dernier étant en concentration variable.

La composition quantitative de ces solutions est présentée dans le tableau II ci-après.

Tableau II

| Constituants | Concentrations |
|---|---|
| Nd | 0,3 g/L |
| Dy | 0,3 g/L |
| Pr | 0,3 g/L |
| Fe | 0,3 g/L |
| Co | 0,3 g/L |
| Ni | 0,3 g/L |
| B | 0,2 g/L |
| $HNO_3$ | 0,1 mol/L |
| $NaNO_3$ | 0,5 - 3 mol/L |

Les phases organiques et aqueuses ont été mises en contact les unes avec les autres dans un rapport O/A de 1, pendant 30 minutes, à température ambiante et sous agitation rotative, puis séparées les unes des autres par décantation. Les concentrations des différents cations métalliques ont été mesurées dans les phases aqueuses ainsi récupérées.

Le tableau III ci-après présente les coefficients de distribution des différents cations métalliques obtenus en fonction de la concentration initiale du nitrate de sodium dans les phases aqueuses tandis que le tableau IV ci-après présente les facteurs de séparation entre les trois terres rares (Nd, Dy et Pr) d'une part, et entre le néodyme et le fer, le cobalt, le nickel et le bore d'autre part, également en fonction concentration initiale du nitrate de sodium dans les phases aqueuses.

Tableau III

| **[$NaNO_3$]** (mol/L) | **Coefficients de distribution** | | | | | | |
|---|---|---|---|---|---|---|---|
| | **$D_{Nd}$** | **$D_{Pr}$** | **$D_{Dy}$** | **$D_{Fe}$** | **$D_{Ni}$** | **$D_{Co}$** | **$D_B$** |
| 0,5 | 0,613 | 0,59 | 0,283 | 0,162 | 0,2 | 0,0119 | 0,51 |
| 1 | 1,82 | 1,78 | 0,93 | 0,5 | 0,66 | 0,052 | 0,5 |
| 2 | 5,1 | 4,9 | 2,95 | 0,96 | 0,07 | 0,082 | 0,5 |
| 2,5 | 8,1 | 7,67 | 5,02 | 1,48 | 0,098 | 0,114 | 0,53 |
| 3 | 12,1 | 11,4 | 8 | 2,22 | 0,11 | 0,141 | 0,51 |

Tableau IV

| **[$NaNO_3$]** (mol/L) | **Facteurs de séparation** | | | | | | |
|---|---|---|---|---|---|---|---|
| | **$FS_{Nd/Pr}$** | **$FS_{Nd/Dy}$** | **$FS_{Pr/Dy}$** | **$FS_{Nd/Fe}$** | **$FS_{Nd/Ni}$** | **$FS_{Nd/Co}$** | **$FS_{Nd/B}$** |
| 0,5 | 1,039 | 2,17 | 2,08 | 3,79 | 2,7 | 51,7 | 1,2 |
| 1 | 1,019 | 1,96 | 1,92 | 3,64 | 2,74 | 36 | 3,6 |

(suite)

| [$NaNO_3$] (mol/L) | Facteurs de séparation | | | | | | |
|---|---|---|---|---|---|---|---|
| | $FS_{Nd/Pr}$ | $FS_{Nd/Dy}$ | $FS_{Pr/Dy}$ | $FS_{Nd/Fe}$ | $FS_{Nd/Ni}$ | $FS_{Nd/Co}$ | $FS_{Nd/B}$ |
| 2 | 1,0361 | 1,726 | 1,66 | 5,31 | 71 | 62 | 10,1 |
| 2,5 | 1,056 | 1,613 | 1,52 | 5,46 | 83 | 72 | 15,3 |
| 3 | 1,07 | 1,517 | 1,42 | 5,4 | 116 | 90 | 23,6 |

Comme le montre le tableau III, l'augmentation de la concentration du nitrate de sodium en phase aqueuse favorise l'extraction des terres rares par rapport à celle des autres cations métalliques : ainsi, pour une concentration du nitrate de sodium de 3 mol/L, $D_{Nd}$ est égal à 12,1, $D_{Pr}$ est égal à 11,4 et $D_{Dy}$ est égal à 8 alors que les coefficients de distribution inférieurs des autres cations sont tous inférieurs à 2,5.

Par ailleurs, comme le montre le tableau IV, les terres rares peuvent non seulement être extraites sélectivement vis-à-vis des autres cations métalliques d'une phase aqueuse nitrique comprenant 3 mol/L de nitrate de sodium (avec $FS_{Nd/Fe}$ = 5,4; $FS_{Nd/Ni}$ = 116 ; $FS_{Nd/Co}$ = 90 et $FS_{Nd/B}$ = 23,6) mais elles peuvent également être séparées les unes des autres à partir d'une phase aqueuse nitrique comprenant 0,5 mol/L de nitrate de sodium (avec $FS_{Nd/Pr}$ = 1,039 ; $FS_{Nd/Dy}$ = 2,17 et $FS_{Pr/Dy}$ = 2,09).

**3.2 - Absence d'influence de la concentration du fer dans la phase aqueuse nitrique**

Le fer étant l'impureté principale des solutions issues de la dissolution d'aimants permanents NdFeB, usagés ou rebutés, en milieu acide, des essais d'extraction ont été réalisés en tubes en utilisant :

- comme phases organiques : des phases uniquement constituées de DBAc ; et
- comme phases aqueuses : des solutions comprenant 0,3 g/L de néodyme (apporté sous forme de $Nd(NO_3)_3•6H_2O$), 0,3 g/L de dysprosium (apporté sous forme de $Dy(NO_3)_3•6H_2O$), 0,3 g/L de praséodyme (apporté sous forme de $Pr(NO_3)_3$), de 0,3 g/L à 3 g/L de fer (apporté sous forme de $Fe(NO_3)_3•H_2O$), 0,1 mol/L d'$HNO_3$ et 3 mol/L de $NaNO_3$.

Les phases organiques et aqueuses ont été mises en contact les unes avec les autres dans un rapport O/A de 1, pendant 30 minutes, à température ambiante et sous agitation rotative, puis séparées les unes des autres par décantation. Les concentrations des différents cations métalliques ont été mesurées dans les phases aqueuses ainsi récupérées.

Les résultats de ces essais sont illustrés sur la figure 8 qui indique les facteurs de séparation $FS_{Nd/Pr}$, $FS_{Nd/Dy}$, $FS_{Pr/Dy}$ et $FS_{Nd/Fe}$ obtenus en fonction de la concentration initiale du fer, notée [Fe] et exprimée en g/L, dans les phases aqueuses.

Outre de confirmer la capacité du DBAc à extraire sélectivement les terres rares d'une phase aqueuse nitrique comprenant 3 mol/L de nitrate de sodium, la figure 8 montre qu'une augmentation de la concentration du fer dans cette aqueuse, de 0,3 g/L à 3 g/L, n'entraine aucune variation significative ni de la sélectivité que présente le DBAc pour les terres rares vis-à-vis du fer ni de la sélectivité que présente le DBAc pour chacune de ces terres rares vis-à-vis des deux autres.

**EXEMPLE 4: Schéma d'un exemple de mise en oeuvre du procédé de récupération de l'invention**

On se réfère à présent à la figure 9 qui représente schématiquement un exemple de mise en oeuvre du procédé de récupération selon l'invention conçu pour la production, à une échelle industrielle, de praséodyme, de dysprosium et de néodyme sous forme de trioxydes, à partir d'une phase aqueuse acide issue du traitement d'aimants permanents NdFeB, usagés ou rebutés, par de l'acide nitrique.

Cette phase aqueuse, qui est dénommée ci-après et sur la figure 9 « Phase aqueuse A1 », peut notamment résulter de la dissolution en milieu nitrique, supplémenté en un agent oxydant, d'une poudre d'aimants permanents NdFeB usagés ou rebutés préparée selon l'enseignement de la référence [2] précitée.

Une telle phase aqueuse comprend typiquement du néodyme, du praséodyme, du dysprosium, du fer ainsi qu'un certain nombre d'impuretés métalliques telles que du cobalt, du nickel, du bore, du cuivre, du chrome, de l'aluminium, etc. Ce fer et ces impuretés sont regroupés, dans ce qui suit, sous le terme « éléments indésirables ».

Par ailleurs, elle comprend de l'acide nitrique ainsi qu'un sel qui est, de préférence, un sel nitrate, par exemple un nitrate de sodium ou de potassium.

Comme visible sur la figure 9, un cycle du procédé de récupération de l'invention comprend :

- une étape dénommée « Co-extraction Dy+Pr+Nd », qui consiste à co-extraire le praséodyme, le dysprosium et le néodyme de la phase aqueuse A1 au moyen d'une phase organique ;
- une étape dénommée « Désextraction Dy, Pr, Nd », qui consiste à désextraire successivement et dans cet ordre le praséodyme, le dysprosium et le néodyme de la phase organique issue de la « Co-extraction Dy+Pr+Nd » au moyen d'une phase aqueuse A2 ; et
- une étape dénommée « Traitement phase organique », qui consiste à soumettre la phase organique issue de la « Désextraction Dy, Pr, Nd » à une série de traitements pour la purifier en vue de sa réutilisation dans le cycle suivant.

Concrètement, la « Co-extraction Dy+Pr+Nd » est réalisée dans l'extracteur 1 en mettant la phase aqueuse A1 entrant dans cet extracteur plusieurs fois en contact, à contre-courant, avec la phase organique, chaque mise en contact étant suivie d'une séparation des phases aqueuse et organique.

Pour optimiser cette co-extraction, il est préférable que la phase aqueuse A1 ait une concentration en acide nitrique comprise entre 0,01 mol/L et 5 mol/L et, mieux encore, de 0,1 mol/L, ainsi qu'une concentration en sel nitrate comprise entre 0,1 mol/L et 5 mol/L et, mieux encore, entre 2,5 mol/L et 3 mol/L. Il est également préférable que la phase organique soit uniquement constituée que de DBAc.

La phase organique sortant de l'extracteur 1, qui est chargée en dysprosium, praséodyme et néodyme, est dirigée vers l'extracteur 2 dévolu à la « Désextraction Dy, Pr, Nd » tandis que la phase aqueuse sortant de cet extracteur, qui est épurée en dysprosium, praséodyme et néodyme mais dans laquelle se trouvent les autres éléments métalliques, est dirigée vers une unité de traitement des effluents aqueux.

La « Désextraction Dy, Pr, Nd » est réalisée dans l'extracteur 2 en mettant la phase organique plusieurs fois en contact, à contre-courant, avec la phase aqueuse A2, chaque mise en contact étant suivie d'une séparation des phases aqueuse et organique.

La phase aqueuse A2 est, par exemple, une solution aqueuse comprenant 0,1 mol/L d'acide nitrique et 0,5 mol/L du même sel nitrate que celui présent dans la phase aqueuse A1 ou, mieux encore, de l'eau distillée ou une solution aqueuse comprenant au moins 5 mol/L d'acide nitrique.

La phase aqueuse sortant de l'extracteur 2, qui est chargée en dysprosium, puis en praséodyme, puis en néodyme est dirigée vers une unité de traitement de ces terres rares où le dysprosium, le praséodyme et le néodyme sont transformés en trioxydes par calcination des fractions de phase aqueuse A2 dans lesquelles ils se trouvent.

## RÉFÉRENCES CITÉES

**[1]** Demande internationale PCT WO 2016/046179
**[2]** Demande internationale PCT WO 2014/064597

## Revendications

1. Utilisation du *N,N*-dibutylacétamide comme extractant pour extraire au moins une terre rare d'une phase A1 aqueuse et acide.

2. Procédé d'extraction liquide-liquide d'au moins une terre rare d'une phase A1 aqueuse et acide, qui comprend au moins une mise en contact de la phase A1 avec une phase organique non miscible à l'eau et comprenant au moins un extractant, puis une séparation de la phase A1 de la phase organique, et qui est **caractérisé en ce que** l'extractant est le *N,N*-dibutylacétamide.

3. Procédé d'extraction selon la revendication 2, **caractérisé en ce que** la phase organique comprend au moins 0,1 mol/L de *N,N*-dibutylacétamide et, de préférence, au moins 3 mol/L de *N,N*-dibutylacétamide.

4. Procédé d'extraction selon la revendication 2 ou la revendication 3, **caractérisé en ce que** la phase organique comprend 4,79 mol/L de *N,N*-dibutylacétamide.

5. Procédé d'extraction selon l'une quelconque des revendications 2 à 4, **caractérisé en ce que** la phase A1 comprend un acide minéral fort.

6. Procédé d'extraction selon la revendication 5, **caractérisé en ce que** l'acide minéral fort est l'acide nitrique et **en ce que** la phase A1 comprend de plus un sel, de préférence un sel nitrate et, mieux encore, un sel nitrate d'un métal

alcalin ou alcalino-terreux.

7. Procédé d'extraction selon la revendication 6, **caractérisé en ce que** la concentration de l'acide nitrique dans la phase A1 est au plus égale à 5 mol/L tandis que la concentration du sel nitrate dans la phase A1 est au moins égale à 0,5 mol/L.

8. Procédé d'extraction selon la revendication 7, **caractérisé en ce que** la concentration de l'acide nitrique dans la phase A1 est comprise entre 0,01 mol/L et 0,5 mol/L tandis que la concentration du sel nitrate dans la phase A1 est comprise entre 1 mol/L et 5 mol/L.

9. Procédé de récupération d'au moins une terre rare à partir d'une phase A1 aqueuse et acide, **caractérisé en ce qu'**il comprend :

   a) une extraction de ladite au moins une terre rare de la phase A1 par un procédé d'extraction selon l'une quelconque des revendications 2 à 8 ; et
   b) une désextraction de ladite au moins une terre rare de la phase organique obtenue à l'issue de a), la désextraction comprenant au moins une mise en contact de la phase organique avec une phase A2 aqueuse, puis une séparation de la phase organique de la phase A2.

10. Procédé de récupération selon la revendication 9, **caractérisé en ce que** la phase A2 est de l'eau distillée.

11. Procédé de récupération selon la revendication 9, **caractérisé en ce que** la phase A2 est une solution aqueuse comprenant au moins 5 mol/L d'acide nitrique.

12. Procédé d'extraction selon l'une quelconque des revendications 2 à 8 ou procédé de récupération selon l'une quelconque des revendications 9 à 11, **caractérisé en ce que** la phase A1 est une solution d'attaque acide d'un concentré d'un minerai naturel ou urbain comprenant des terres rares.

13. Procédé d'extraction selon l'une quelconque des revendications 2 à 8 ou procédé de récupération selon l'une quelconque des revendications 9 à 11, **caractérisé en ce que** la phase A1 est une solution issue du traitement d'aimants permanents Néodyme-Fer-Bore, usagés ou rebutés, par un acide fort et **en ce que** les terres rares sont le dysprosium, le praséodyme et le néodyme.

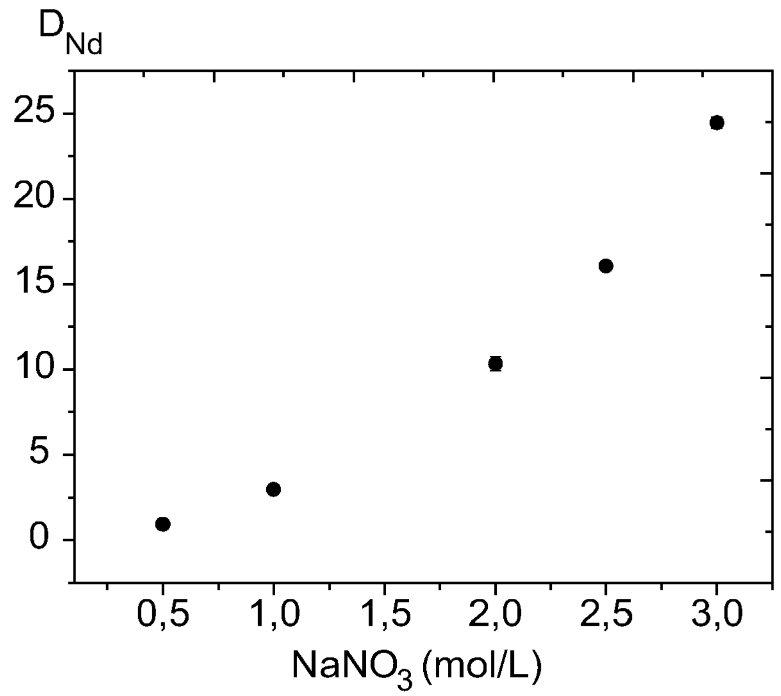
$D_{Nd}$
25
20
15
10
5
0
0,5
1,0
1,5
2,0
2,5
3,0
$NaNO_3$ (mol/L)

FIG. 1

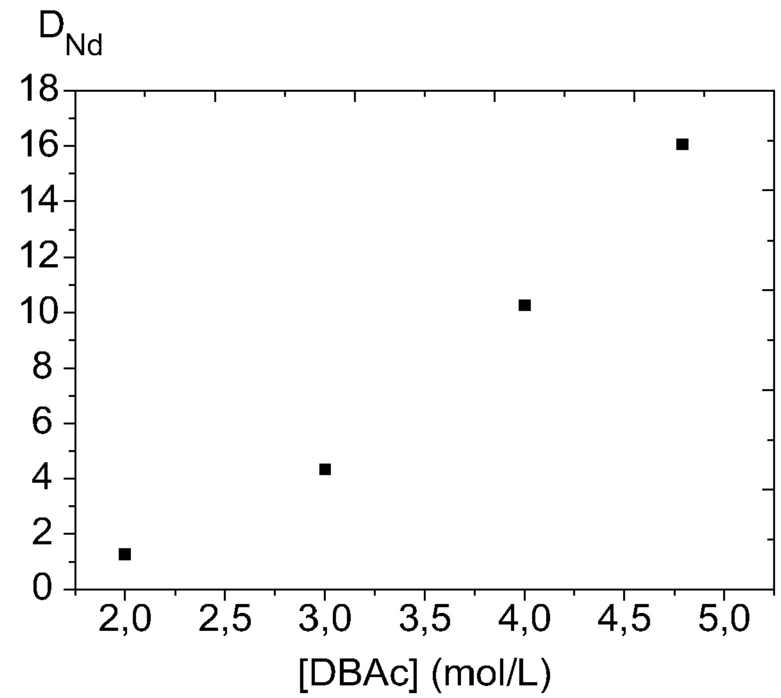
$D_{Nd}$
18
16
14
12
10
8
6
4
2
0
2,0
2,5
3,0
3,5
4,0
4,5
5,0
[DBAc] (mol/L)

FIG. 2

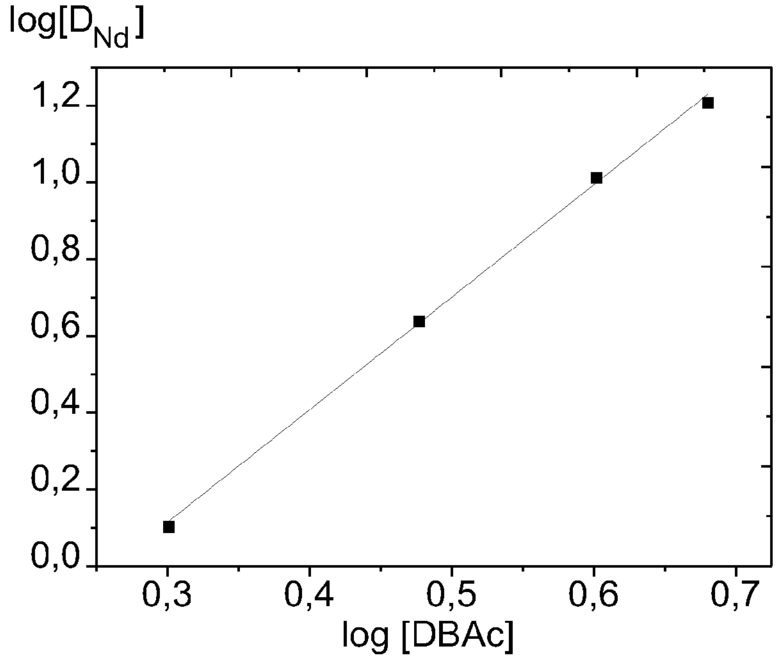
log[D_Nd]
1,2
1,0
0,8
0,6
0,4
0,2
0,0
0,3
0,4
0,5
0,6
0,7
log [DBAc]

FIG. 3

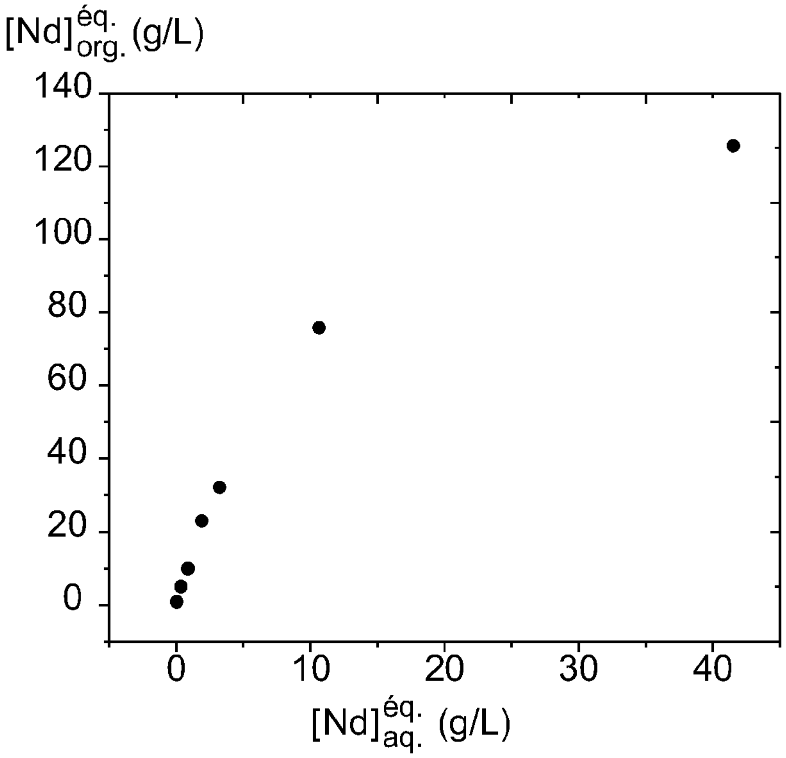
[Nd]éq. org. (g/L)
140
120
100
80
60
40
20
0
0
10
20
30
40
[Nd]éq. aq. (g/L)

FIG. 4

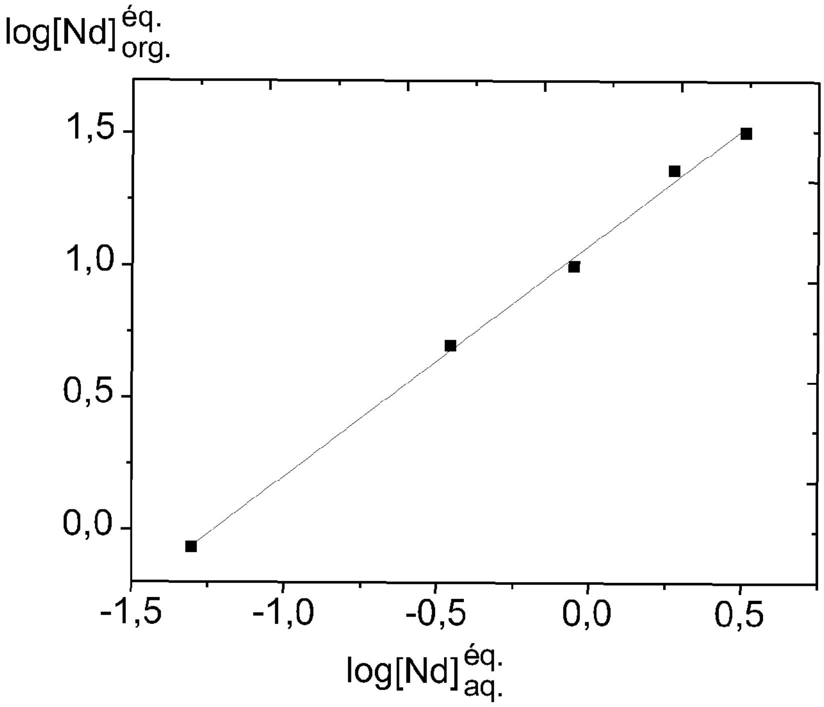
log[Nd] éq. org.
1,5
1,0
0,5
0,0
-1,5
-1,0
-0,5
0,0
0,5
log[Nd] éq. aq.

FIG. 5

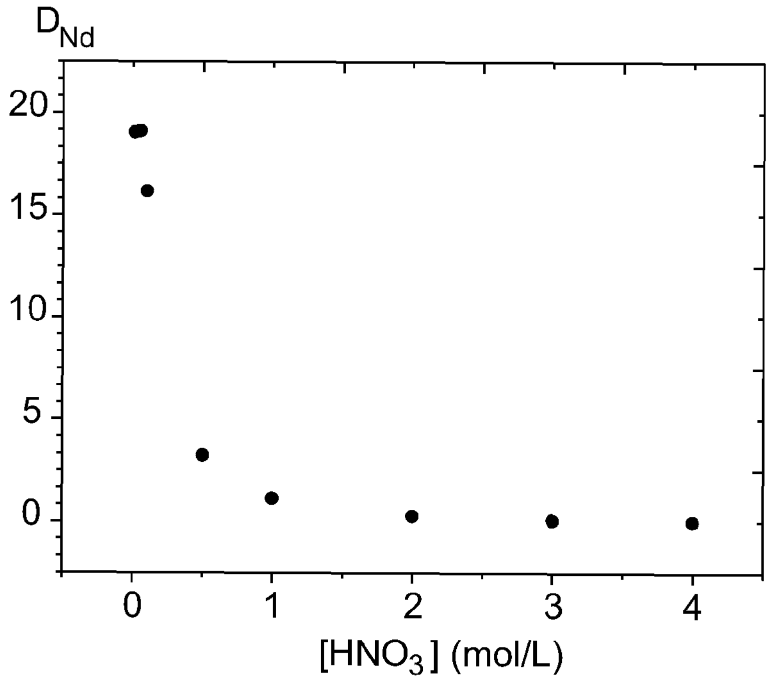
D Nd
20
15
10
5
0
0
1
2
3
4
[HNO3] (mol/L)

FIG. 6

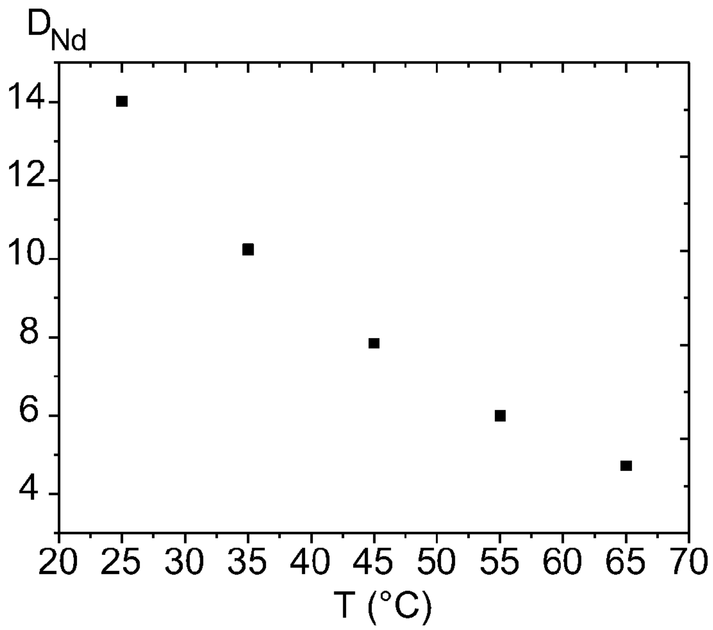
D_Nd
14
12
10
8
6
4
20 25 30 35 40 45 50 55 60 65 70
T (°C)

FIG. 7

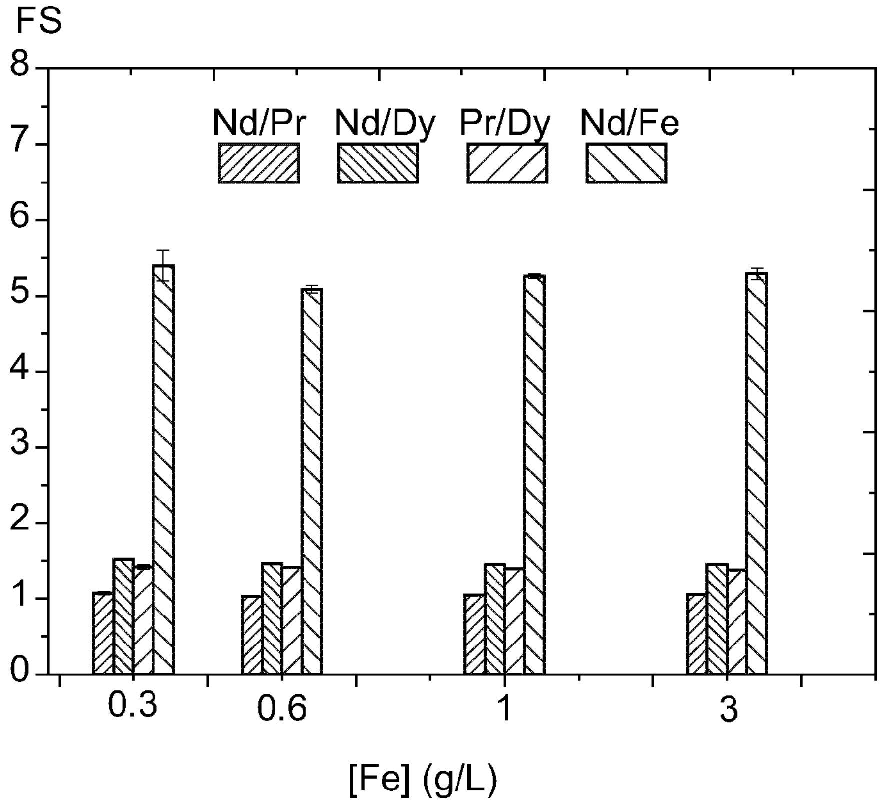
FS
8
7
6
5
4
3
2
1
0
Nd/Pr
Nd/Dy
Pr/Dy
Nd/Fe
0.3
0.6
1
3
[Fe] (g/L)

FIG. 8

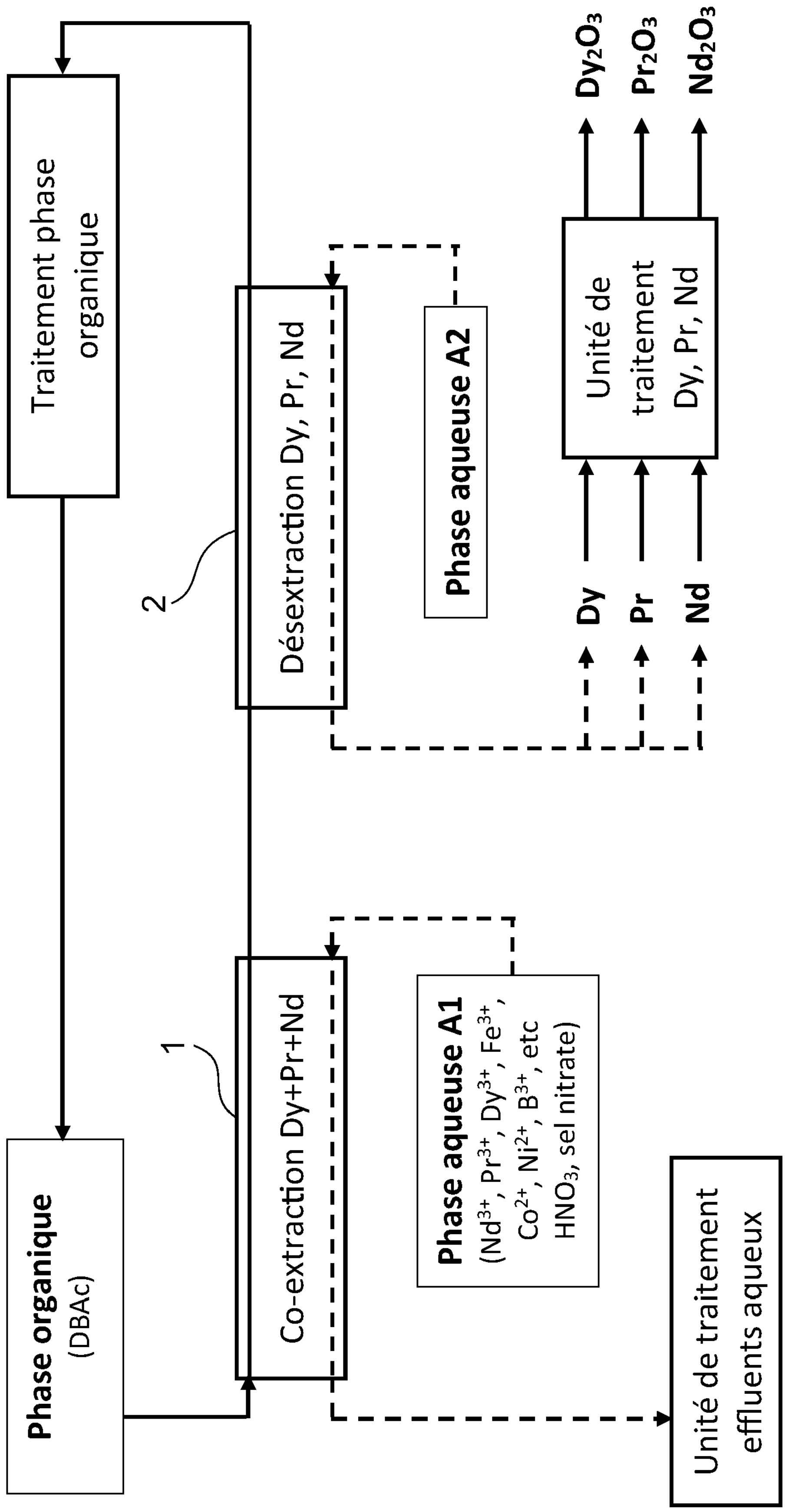
Phase organique
(DBAc)
Co-extraction Dy+Pr+Nd
1
Phase aqueuse A1
(Nd3+, Pr3+, Dy3+, Fe3+, Co2+, Ni2+, B3+, etc HNO3, sel nitrate)
Unité de traitement effluents aqueux
Traitement phase organique
Désextraction Dy, Pr, Nd
2
Phase aqueuse A2
Dy
Pr
Nd
Unité de traitement Dy, Pr, Nd
Dy2O3
Pr2O3
Nd2O3

FIG. 9

Europäisches Patentamt
European Patent Office
Office européen des brevets

## RAPPORT DE RECHERCHE EUROPEENNE

Numéro de la demande
EP 17 20 2322

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br><br><br><br><br><br><br><br><br><br><br>A | G. BENAY ET AL: "Liquid-Liquid Extraction of Uranyl by an Amide Ligand: Interfacial Features Studied by MD and PMF Simulations", JOURNAL OF PHYSICAL CHEMISTRY PART B: CONDENSED MATTER, MATERIALS, SURFACES, INTERFACES & BIOPHYSICAL, vol. 117, no. 24, 20 juin 2013 (2013-06-20), pages 7399-7415, XP055371420, US ISSN: 1520-6106, DOI: 10.1021/jp4028386<br>* abrégé *<br>* Scheme 1 *<br>* tableau 1 *<br>* page 7401, colonne 2, ligne 57 - page 7403, colonne 1 *<br>* page 7405 *<br>* page 7406, colonne 2 - page 7408, colonne 1 *<br>----- | 1,2,5<br><br><br><br><br><br><br><br><br><br><br><br>3,4,6-13 | INV.<br>C22B3/32<br>C22B59/00 |
| A | BAADEN M ET AL: "Interaction of trivalent lanthanide cations with phosphoryl derivatives, amide, anisole, pyridine and triazine ligands: a quantum mechanics study", JOURNAL OF ALLOYS AND COMPOUNDS, ELSEVIER SEQUOIA, LAUSANNE, CH, vol. 303-304, 1 mai 2000 (2000-05-01), pages 104-111, XP004204341, ISSN: 0925-8388, DOI: 10.1016/S0925-8388(00)00657-5<br>* abrégé *<br>* figure 1 *<br>* page 109, colonne 1, alinéa 3.2 - page 109, colonne 2 *<br>* page 109, colonne 2, alinéa 4 - page 110, colonne 2 *<br>-----<br>-/-- | 1-13 | DOMAINES TECHNIQUES RECHERCHES (IPC)<br>C22B |

Le présent rapport a été établi pour toutes les revendications

1

| Lieu de la recherche | Date d'achèvement de la recherche | Examinateur |
|---|---|---|
| Munich | 7 décembre 2017 | Riederer, Florian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 17 20 2322

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ROMAIN DISS ET AL: "Lanthanide cationextraction by malonamideligands: from liquid-liquid interfaces to microemulsions. A molecular dynamics study", PHYSICAL CHEMISTRY CHEMICAL PHYSICS., vol. 7, no. 2, 1 janvier 2005 (2005-01-01), pages 264-272, XP055371416, GB ISSN: 1463-9076, DOI: 10.1039/B410137E * le document en entier * ----- | 1-13 | |

DOMAINES TECHNIQUES RECHERCHES (IPC)

Le présent rapport a été établi pour toutes les revendications

1

| Lieu de la recherche | Date d'achèvement de la recherche | Examinateur |
|---|---|---|
| Munich | 7 décembre 2017 | Riederer, Florian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

page 2 de 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016046179 A
- WO 2014064587 A
- WO 2014064597 A